# EUROPEAN PATENT APPLICATION

(11) **EP 4 841 550 A2**
(43) Date of publication of application: **18.11.2026**
(21) Application number: 26209333.9
(22) Date of filing: 04.06.2021
(51) Int. Cl.: G06Q 50/08

(54) **METHOD AND SOFTWARE PROGRAM PRODUCT FOR EVALUATION OF NEEDS IN CONSTRUCTION PROJECTS**

(62) Document number(s) of the earlier application(s) in accordance with Art. 76 EPC: 21177671.1 / 4 099 236
(71) Applicant: Quanttos Oy, 90130 Oulu (FI)
(72) Inventor: RÄIHÄ, Pentti, 91210 Jakkukylä (FI)
(74) Representative: Boco IP Oy Ab

(57) **Abstract**

The invention provides a system for evaluation of details of one or more objects of a construction project by means of a software program product executed by a computer. An image of the construction project is received from a user and the user also informs the dimensional scale of the image to the software program product. An object indicated in the image by the user is recognized, and other objects similar to the indicated object are recognized. The indicated and recognized objects are evaluated by means of the software program product and evaluation results are displayed on a display either as a combined result for all these objects or as a separate result for each object.

## Description

### TECHNICAL FIELD

The invention is concerned with a system for evaluation of details of one or more objects of a construction project.

### BACKGROUND

A construction project entails different stages, such as initiation, planning, implementation, performance, monitoring, and closing. It involves the choice of technology, the definition of work tasks, the estimation of the required resources and the durations for individual tasks, and the identification of any other interactions among the different work tasks. A good construction plan is the basis for developing the budget and the schedule for construction work and includes the concept of a project and a schematic design.

The schematic design is a sketch in the form of a construction drawing or image that will show the space as well as materials, colours, and even textures. The sketch will be used to evaluate the equipment and material needed as well as the cost for them. Contract documents are drawn up based on final drawings and specifications.

There are some principles for a manual calculation of the amount of material and costs for planning, calculation and purchase of construction material. The consumption of material is the amount of material needed to perform a project.

The final documents and drawings for a given construction project are the base for the calculation. A drawing includes many construction elements, which are named and a scale for their dimensions have to be determined.

Older methods are based on drawings on paper, calculators, and scaling rulers for manual calculation. The calculation models are very often based on Microsoft's excel.

Nowadays, the construction branch is striving to become more digitalized and software has been developed to facilitate the planning work in order to avoid time consuming old methods.

Examples of more modern digitized methods exist, such as those presented in US patent application 2020/0175211A1, which discloses a method of automatically recognizing and classifying design information in an imaged piping and instrumentation diagram.

KR101224627B1 discloses a method for calculating the quantity and design of a construction structure by using Building Information Modeling (BIM). The quantity of structures is calculated in a design step, and the expected quantity of the structures is estimated by calculating the quantity of the structures by inputting structure analysis and design information to the BIM structure.

KR20120109677A discloses a system for material calculation using one or more drawing files. The system analyzes a text within the inputted design drawing. The system generates a finishing material list. The system calculates each construction surface or length and calculates finishing material quantity.

US6922701 B1 discloses a method for generating a post-CAD, CAD-independent profile of a building for building and remodeling projects.

JP2006209477 A discloses a building total estimation system and method.

US patent application 2011/064652 A1 discloses a building construction software and system.

US patent application 2020/175211 A1 discloses a method of automatically recognizing and classifying design information in imaged P&ID drawing and automatically creating an intelligent P&ID drawing.CN1107655511 discloses a BIM-based method for prefabricated interior decoration, in which building drawings are imported and building components are selected form a component library for evaluation.

US2020175211 discloses computer-assisted object recognition in image data, including training of a software system to recognize objects.

The object of the invention is a versatile evaluation method for getting information of material quantities and costs as well as other details for a construction project, and which easily can be adapted for different kinds of projects where material and other objects are used.

### SUMMARY

The invention provides a computer-implemented method according to claim 1 for evaluation of details of one or more objects of a construction project by means of a software program product executed in a computer.

The computer program product to be used in the method of the invention comprises instructions to cause performing steps according to claim 24 when run in a computer.

The preferable embodiments of the invention have the characteristics of the dependent clams.

The construction project can e.g. be a building, a construction element, an electrical implementation, such as a wiring and/or connection design, or a Heating, Ventilation, and Air Conditioning (HVAC) implementation.

The object in such a construction project can be a space, an element, a construction part or an entity of the construction part.

When the construction project is a building, the object can e.g. be an interior wall, an exterior wall, a door, a window, a floor, a ceiling, a roof, a façade, a foundation, or a plot. When the object is an interior wall, its components might be e.g. material layers, studs, upper supports, and lower supports. Additional dimension information can be informed to the software program product, such as dimensions of sections to be decreased from the calculations of material for a wall due to windows or doors in a wall.

When the construction project is an electrical implementation, such as a wiring and/or connection design, the objects can be cables, sockets, switches, luminaires, a power room, a radiator, an electric supply cable, and the component can be connecting means.

When the construction project is a Heating, Ventilation, and Air Conditioning (HVAC) implementation, the objects can be ventilation channels, valves, soil pipes, water closet pans, taps, basins, domestic water pipes for warm or cold water, heater pipes or, or corner pieces and the components e.g. fastening means.

Said detail to be evaluated for the object can be a dimension, an area, a volume, an amount, a number, a length, and/or a height for the whole object of for a component of the object, whereby the evaluation includes a measurement and/or a calculation.

The measurement and/or calculation of the object gives an evaluation of the need of the amount of material(s) needed for the object and/or its components to be realized. Said evaluation can also include a calculation of the dimensions and/or number of objects or its components.

Thus, the defined components constitute material information and assembly information, whereby the assembly information includes dimensional information and dimensional relations of e.g. material layers as/or components constituting an object and possibly, how the components are assembled together. The definitions of components for a given object are stored in a database as an object assembly or package, whereby the software program product evaluates the details of all the components of the assembly or package of a selected or of an indicated object.

The software program product can collect all the objects of the indicated or selected type from the image that can be a drawing and gives the result as an evaluation as a sum of the evaluations of each object or separately for each object.

The result of the calculations and measurements is shown on a display of a computer as information of the number of objects needed, the dimensions of the objects needed, material amounts needed for the objects and/or the costs of individual objects and of a sum of objects. The cost information is either calculated by the software program product or by another program on the basis of the evaluation result performed by the software program product and/or on the basis of evaluated working hours and other work or general costs.

There are usually many objects and details of them on the image or drawing to be evaluated so the user can repeat the step of selecting an object to be evaluated for other details in the image or drawing, whereby the result can be shown for all the selected objects as a combined result.

The user can perform the indication of the object e.g. by pointing or clicking on a symbol or its site on the image or e.g. by dragging over or clicking with the mouse of the computer.

When in the method, the user is indicating, e.g. by pointing on or clicking on a certain object on the image or drawing, the user can give dimensional and material assembly information of components constituting the object either by inputting it in connection with the method in use or by fetching it from a database or by letting the software program product fetch it from the database, wherein this information is previously stored or then by telling the software product where to find the information in the database.

The user can in this way train the software program in connection with each use of the method to gradually learn to combine an object, which is pointed to on the drawing, with given components or with a given assembly or package, by itself.

The software program product can learn to recognize an object on an image by pattern recognition, on the basis of a description of an object on the image or drawing by means of a line type, element, item, symbol, icon, font, geometric or other form, text, letter, word, number and/or the like. The software program product can thus learn to fetch upon training the component constituting the object from the database after having recognized the object as a result of pattern recognition of the object how it is illustrated in the drawing. The training of the software program continues to take place in each use of the method.

The drawing can be constructed as a two-dimensional (2D) image, such as a Computer Aided Design (CAD) image, a DWG drawing, a Portable Document Format (PDF) image, a Graphics Interchange Format (GIF) image, or a Joint Photographic Group (JPG) image. In some embodiments, the drawing is constructed as a three-dimensional (3D) image. Height information of an object is informed to the software program product when the drawing is constructed as a two-dimensional (2D) image.

A still further function of the software program product is that it continuously collects data of evaluation events with different users and is able to compare the results of similar construction projects and give the outcome of the comparations together with the result to a user.

With this function, the user can e.g. then see if the results of a given evaluation are in line with similar constructions projects with respect to e.g buildings of the same size. If for example the costs or material amounts for a given construction project are considerably higher or lower than for similar construction projects, the user might have forgotten to evaluate something, evaluated something twice, or estimated the working hours incorrectly. The overall plan of the construction project might also be necessary to improve for these reasons. This is valuable feedback for getting useful results and enables the user to e.g. corrects mistakes or improve the plan for the construction project.

In embodiments, wherein this function is in use, the user usually has to enter background or general data of the construction project for the comparison in addition to requesting an object for the evaluation. Optionally, background data might include general statistical information. The software program product might also have access to statistical information informed in advance.

The comparisons are performed on the basis of given factors and characteristics of the construction products which can be asked by the user in connection with the evaluation process, such as in the beginning of the process when the user entries data or indicates an object. The user is e.g. requested by the software program product to fill fields in a form or a template with requested data.

When all the calculations and measurements have been done, the user can make use of the results presented by the software program product by ordering the products needed in a correct amount and number to the worksite and by attaching the list of materials and products needed to an offer to a client.

The invention decreases the time for making offers and for calculation the profitability in connection of e.g. material consumption and costs.

In the following, the invention is described by means of some embodiment examples in connection with different types of construction projects. The invention is not restricted to the details of the examples.

### FIGURES

Figure 1 is a part of a floor plan of a flat of a building
Figure 2 shows an electrical wiring in a room of a building
Figure 3 is a part of a HVAC implementation
Figure 4 is a signal diagram of the method of the invention

### DETAILED DESCRIPTION

### EXAMPLE 1 (BUILDING)

In the first example, it is assumed that the construction project is a building.

For the purpose of construction of a building, a drawing is prepared comprising all the details for constructing the intended building. The drawing can be prepared by the user himself or by a third party. Instead of a drawing, an image of the construction project can be used.

Construction drawings are used to construct the building, so it is important that they contain everything the contractor needs to build. This will include information such as structural layout or grid, dimensions, and a clear labelling of elements. Thus, the drawing usually comprises e.g. walls, doors, windows, frames for those and, generally, elements needed for the construction. These are usually labelled with dimensions, architectural features, notes, details and other graphic information. These drawings will show things like the floor plan, exterior and interior elevations, and a lot of details showing exactly how the building should be put together. The construction drawings can suitably be prepared by the contractor and done for construction purposes. The construction drawings usually include construction finishing drawings including every type of components of the building, such as painting colors, flooring pattern, plastering texture, elevation design, and false ceiling shapes.

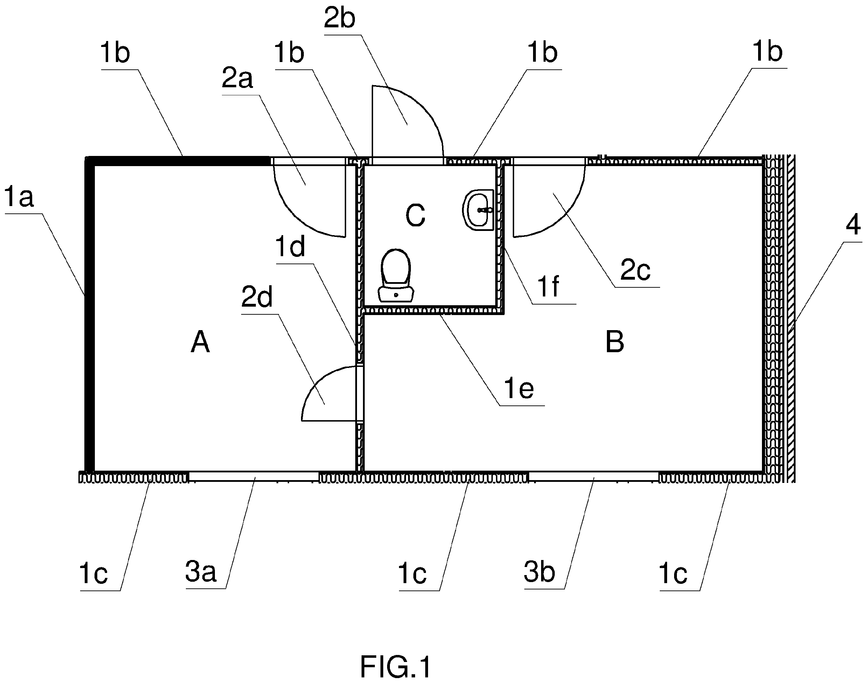

Figure 1 shows a part of a flat, which is simplified for illustrative purposes.

When in the method of the invention, such a construction drawing is put into the software program used in the invention, a dimension line, such as the height and/or length of the building, is referred to for comparison by pointing on the drawing and combining it with number information of the height and/or length, to inform the program the correct dimensional scale thereby setting the drawing into a scale that corresponds to the reality. The dimension line (not shown in figure 1) is thus a measurement line and with dimensional information the measurements done will have the correct values in desired dimensional units.

In this example, it is assumed that the user uses the construction drawing of figure 1 in an image format and puts it into the software program in a way to be read by the software program in order to figure out the material amount for given objects of the drawing, which in this example are interior walls dividing or separating rooms.

In this example, the user intends to calculate material needs for the interior walls of a flat of the building. Figure 1 is a part of a floor plan for the building.

The user has the knowledge of what such an interior wall consists of and defines an object package for an interior wall assembly. The object package contains information of what materials and how much work is needed for constructing the interior walls in the project. Since the drawing is in the form of a two-dimensional image, the user informs the program the height of the room of the building, where the interior wall is.

Also, the component in the form of material layers building up that the interior wall is informed to the program. In this example they consist of
- a wool layer, the length of which can be evaluated from the informed dimensional scale and the thickness of which is not relevant to be considered in this context or has been informed or stored in advance, whereby the software program can evaluate the needed amount of wool by measuring in meters multiplied with a factor giving the room height,
- a Gyproc layer (a type of plaster board), the length of which can be evaluated from the informed dimensional scale and the thickness of which is not relevant to be considered in this context or is informed or stored in advance, whereby the software program can evaluate the needed amount of Gyproc by measuring in meter multiplied with a factor giving the room height,
- poles, the dimensions of which is partly informed and partly evaluated, whereby the software program can evaluate the needed amount of pole material by measuring in meter and then also calculate the number of poles needed by multiplying the measured amount of pole material by a factor of 1,66, since the poles are placed on a distance of 60 cm from each other, so the factor = 1:0,6 = 1,66 poles/m,
- upper and lower supports, whereby the software program can evaluate the amount of pole material needed by measuring in meter multiplied with a factor of two, since there are supports both up and down.

The object package is stored in a database to be fetched by the software program or it is informed to the software program at the use of the method to be directly interpreted by the software program.

In the floor plan of figure 1, A and B are rooms and C is a bathroom, reference numbers 1a - 1f represent interior walls, reference numbers 2a - 2d represent doors, reference numbers 3a and 3b represent windows and reference number 4 represent an exterior wall.

Next, the user selects one interior wall 1a to be evaluated by clicking on the object representing the interior wall 1a on the drawing for which details shall be calculated and evaluated by the software program product.

Since there are many such interior walls on the drawing, the other ones being 1b - 1f, the user can point out each of them or alternatively, the software program product can in some embodiments be able to collect them by itself so that all of them are evaluated as a sum. Instead of clicking on the object it can be painted over by dragging with a mouse, which is indicated by a darker tone in figure 1 for 1a compared to the other interior walls 1b - 1f. The term pointing out is intended to cover either one of these methods.

The software program then calculates the amount of material needed separately for each interior wall by means of the factors with respect to each material component of the interior wall, the interior wall being informed as a package to the software program product. The package can also be stored in advance in a database, from where it is fetched by the program.

If there are areas of the interior wall with constructions that do not contain any material component features of the above type, such as doors 2a - 2c or windows 3a and 3b, the need of material evaluated can be decreased as a subtraction directly on the drawing as a function. Thus, the windows 3a - 3b should be subtracted for the interior wall 1c and the doors 2a - 2c from the interior wall 1b and the door 2d from the interior wall 1d.

In figure 1, each object representing an interior wall is presented by a type of zig-zag line with rounded turns. The software program can be trained to recognize the zig-zag line to represent an interior wall and can be taught to fetch the components of an interior wall, or the assembly or package constituting an interior wall, for which the material need should be calculated.

When the interior walls have been measured and the need of material evaluated, the amount of material needed for each interior wall is transferred to a list that gives the total amount of material. This list can be received from the software program as such and it can also be made use of e.g. in an excel file.

The software program shows a result of the evaluations for the user on the display on the computer of the user.

The software program allows the user to check the site of the interior wall measured, measurement data, etc. and the input data on which the results are based can be changed or supplemented afterwards to thereby give updated results with no need to repeat all the measurements. For example, only the object package needs to be updated. The drawing itself can also be updated. For example, interior walls can be removed or added.

Cost information can be included in the results. The cost information can be calculated by the software program product itself or by another program on the basis of the calculation result performed by the software program product and also on the basis of evaluated working hours and other costs. The other program might be a JCAD program.

The cost calculation can be implemented as an own calculation inside the material evaluation calculation. When used for the first time, the type of costs has to be defined, being at least two, such as the price per square meter material and the price per working hour. As an additional cost type, a value for an effective working hour is also defined, describing e.g. the number of hours needed to install one Gyproc board per square meter. if e.g. the value is 0,1 0,24h is needed to install a board of 2,4 m². So, the cost calculation has to be preceded by defining such unit prices. In calculations to follow, everything does not need to be defined again and the values to be defined decrease all the time with each or almost each use. The cost calculation program will gradually become automatized. The cost calculation program further usually includes individual social contributions etc.

The example was given for interior wall for illustrating purposes and naturally, the method works in the same way for other construction products and objects. Also, the list mentioned can be collected for different objects from the same drawing.

### EXAMPLE 2 (ELECTRICAL WIRING DESIGN)

In the second example, it is assumed that the construction project is an electrical wiring in a room of the building.

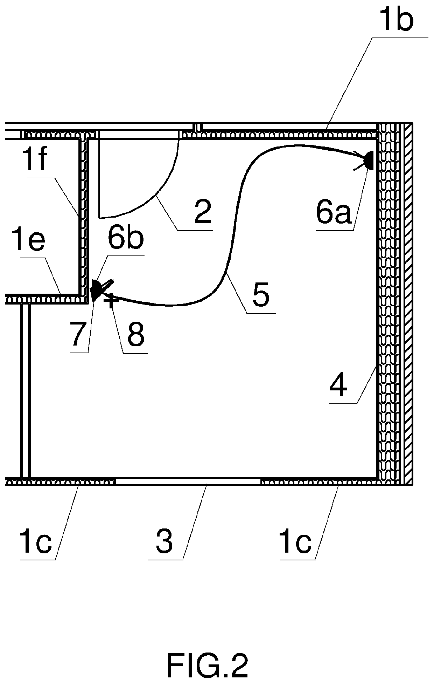

Figure 2 shows a part of a flat, which is simplified for illustrative purposes.

There is an electric cable 5 between two sockets 6a and 6b for electrifying the flat.

In this example, the user intends to calculate material needs for the cables of a flat of the building.

As in example 1, the user informs the dimensional scale of the drawing to the software program product and indicates the cable 5 as an object to be evaluated. The software program can combine the dimensional information received and evaluate the need in meters of the cable. The result is shown on a display on the computer of the user.

The user can evaluate the number of sockets needed by clicking on only one of them and as in the example the software program has been trained to recognize all similar objects, it can calculate the needed number (only two in this example).

The software program can fetch the object information package for sockets and cables from database and thus also evaluate the need for the number of e.g. connection means.

A further function of the software program product of the invention, which is illustrated in figure 2 (but can naturally be in use also e.g. in connection with example 1) is that a mark, in figure 2, the one having reference number 7, is shown in the image when an object has been indicated or alternatively evaluated. Another mark, such as a plus (+) having reference number 8 in figure 2 indicates that also components of the object have been evaluated. In one embodiment, the user can mark objects manually.

### EXAMPLE 3 (HVAC PLAN)

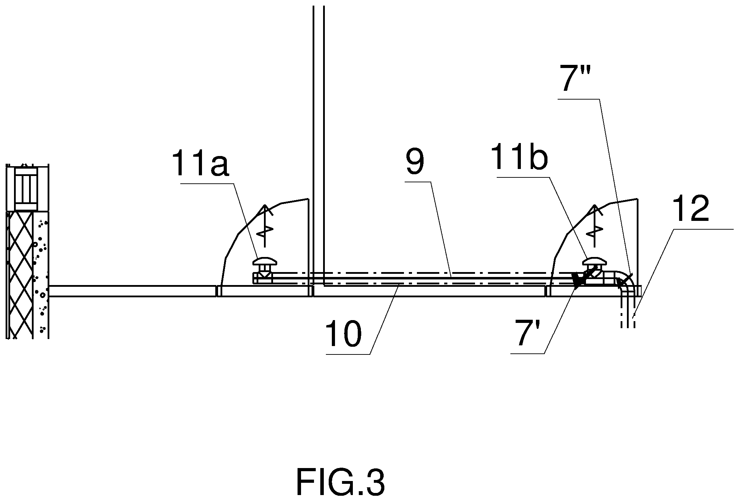

Figure 3 is a part of a Heating, Ventilation, and Air Conditioning (HVAC) plan.

In the third example, it is assumed that the construction project is a part of a HVAC plan in a room of the building.

Figure 3 shows a simplified part for illustrative purposes.

In this example, the user intends to calculate material needs for ventilation channels of a flat of the building.

There is a ventilation channel 9 that is indicated as an object in figure 3. The indication is shown with a line 10. The object is marked 7' as having been evaluated or selected. Other objects shown in figure 3 are valves 11a and 11b that can be indicated. A further object can be a corner piece 12, which also has been marked 7'' for having been evaluated. As in examples 1 and 2, the user informs the dimensional scale of the drawing to the software program product and indicates the ventilation channel 9 as an object to be evaluated. The software program can combine the dimensional information received and evaluate the need of material for the ventilation channel 9 and its components, i.e. such components that cannot be seen in the drawings, such as fastening means. The result is shown om a display on the computer of the user.

The user can evaluate the number of sockets needed by clicking on only one of them and as in the example the software program has been trained to recognize all similar objects, it can calculate the needed number (only two in this example).

Examples 1 - 3 are only simplified examples to illustrate how the method of the invention works. it can naturally be used in any construction project that can be presented in an image with one or more objects to be evaluated.

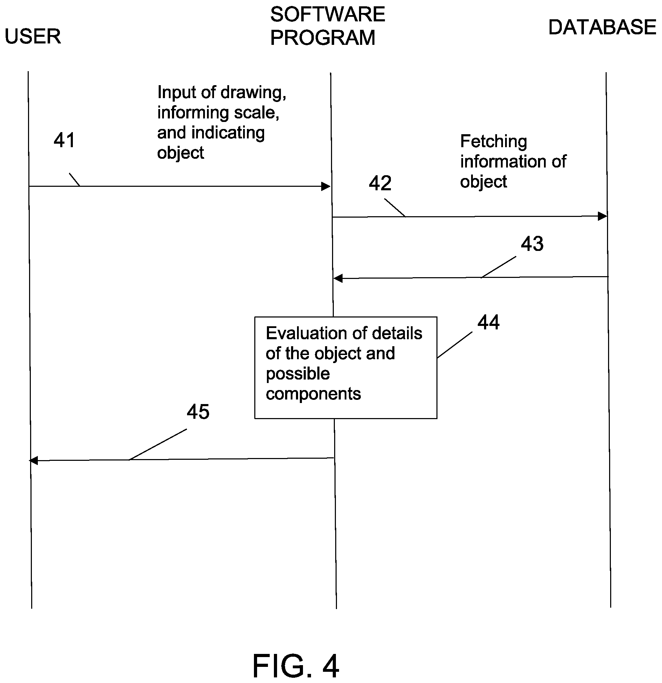

Figure 4 is a signal diagram of an example implementation of the method of the invention made for clarification.

In the method of the invention, a computer-implemented method is used for evaluation of details for one or more objects of a construction project by means of a software program product that is executed by a computer.

For the purpose of the construction project, a drawing is prepared comprising all the elements for constructing the intended construction. The drawing can be prepared by the user himself or by a third part. Instead of a drawing an image of the construction project can be used.

For the method, such a drawing or image is needed that comprise the elements, components or parts that constitute the project, which are presented as objects in the drawing.

The user uses a computer with a software program product connected to a database. The communication is within the computer between the user entries, the software program product and the database.

The evaluation starts with arrow 41 of figure 4 with the user putting in this drawing to the software program product to be read by the software program product and by informing the dimensional scale of the image to the software program product. The user also indicates an object in the image for the evaluation of the details of the object and optionally its possible components to be evaluated by the software program product. The indication of the object might take place separately and the image or drawing might have been put in earlier.

The object might be built up of components that possibly have been informed earlier and been stored in a database. Therefore, when this is the case, shown by arrows 42 and 43, the software program fetches and receives information of the object indicated from the database.

The software program product then evaluates in step 44 the details of the indicated object or its components on the basis of the information of the object. Said detail to be evaluated for the object and maybe also its components can be information of a dimension, an area, a volume, an amount, a number, a length, and/or a height for the whole object of for a component of the object, whereby the evaluation result includes a measurement result and/or a calculation result. The result of the calculations comprises cost information on the basis of the calculation result for the details performed.

The result of the evaluation is then presented to the user on a display on a computer as shown by arrow 45.

## Claims

1. A system configured to evaluate details for one or more objects of a construction project by means of a software program product executed by a computer, the system comprising:
- a database configured to store, for a plurality of object types of the construction project, component definitions, each component definition including material information and assembly information comprising dimensional relations of components constituting that object type, wherein each component definition is stored in the database in form of an object assembly or package;
- a computer with a software program product configured, when run by the computer, to cause the computer:
- to receive a construction project image illustrating one or more objects and a dimensional scale value informed by a user;
- to receive, from a user, an indication (41) or a selection of a first object in the image,
- to recognize the object type of the first object by means of pattern recognition;
- to fetch (42, 43), from the database, the object assembly or package comprising component definitions associated with the recognized object type of the first object;
- to recognize, within the construction project image, further objects similar to the first object by pattern recognition;
- to evaluate (44) one or more details for the first object or its components and for said further objects or their components by applying the retrieved component definitions to measurements derived from the image based on the dimensional scale value; and
- a display configured to show an evaluation result for all objects of the same object type as a combined result or as a separate result for each object.

2. The system according to claim 1, wherein the software program product is configured to recognize the first object and the further objects by means of pattern recognition of at least one of: a line type, element, item, symbol, icon, font, geometric or other form, text, letter, word, number and/or the like and or any combination or part of these.

3. The system according to claim 1 or 2, wherein software program product has been trained to recognize the object type of the first object based on prior evaluation events in which component definitions were informed to the software program product.

4. The system according to any one of claims 1 to 3, wherein the object is a part of or the entire construction project, such as a space, an element, or a construction part.

5. The system according to any one of claims 1 to 4, wherein one or more details evaluated for each evaluated object or its component is information of a dimension, an area, a volume, an amount, a number, a length, and/or a height for the whole object or for a component of the object, whereby the evaluation result includes a measurement result and/or a calculation result.

6. The system according to claim 5, wherein the calculation result comprises cost information as calculated by the software program product or by another program based on the calculation result for the details performed by the software program product.

7. The system according to claim 6, wherein the cost information is calculated based on evaluated working hours and other work costs and possible other costs.

8. The system according to any one of claims 1 to 7, wherein the software program product is configured to receive, from the user, an indication or selection of at least a second object different form the first object, to recognize, within the construction project image, further objects similar to the second object, and to evaluate one or more details for the second object or its components and for said further objects, whereby the display is configured to present the evaluation result for all objects of the same object type as a combined result or as a separate result for each object.

9. The system according to any one of claims 1 to 8, wherein the software program product is configured to fetch the stored information of the definitions from the database on the basis of the indicated (10) object only, which definitions the software program product has learnt and/or trained to fetch on the basis of an earlier event, wherein the definitions have been informed to the software program product.

10. The system according to any one of claims 1 to 10, wherein the software program product is configured to continuously collect data of evaluation events and compare the evaluation results of a given construction product with results of similar construction products, and to cause the display to present the comparison result together with the evaluation result.

11. The system according to any one of claims 1 to 11, wherein the image is any one of: a drawing and/or constructed as a two-dimensional, 2D, image, such as a Computer Aided Design, CAD, image, a DWG drawing, such as a DXF drawing, a Portable Document Format, PDF, image, a Graphics Interchange Format, GIF, image or a Joint Photographic Group, JPG, image.

12. The system according to any one of claims 1 to 12 the software program product is configured to receive a height information of an object is informed to the software program product when the image is a two-dimensional (2D) image.

13. The system according to any one of claims 1 to 12, wherein the image is a three-dimensional (3D) image.
